# EUROPEAN PATENT SPECIFICATION

(11) **EP 1 666 531 B1**
(45) Date of publication and mention of the grant of the patent: **02.07.2008**
(21) Application number: 04772352.3
(22) Date of filing: 27.08.2004
(51) Int. Cl.: C08L 33/00, C08L 75/04, C08K 5/17

(54) **ACRYLIC SOL COMPOSITION**
ACRYLSOLZUSAMMENSETZUNG
COMPOSITION POUR SOLS ACRYLIQUES

(30) Priority: 10.09.2003 JP 2003317940
(43) Date of publication of application: 07.06.2006
(73) Proprietor: Adeka Corporation, Tokyo 116-8554 (JP)
(72) Inventor: BABA, Kazutaka, c/o ASAHI DENKA Co., Ltd., Saitama-gun, Saitama 3460101 (JP)
(74) Representative: Forstmeyer, Dietmar
(86) International application number: PCT/JP2004/012396
(87) International publication number: WO 2005/026257

(56) References cited:
- EP-A1- 1 158 035
- EP-A1- 1 283 228
- EP-A1- 1 283 229
- WO-A1-01/88011
- JP-A- 3 290 479
- JP-A- 11 035 784
- JP-A- 2000 212 237
- JP-A- 2000 273 262
- JP-A- 2002 256 155
- JP-B2- 5 073 793

## Description

### Technical Field

This invention relates to an acrylic sol composition and, more particularly, to an acrylic sol composition free from generation of hydrogen chloride gas and dioxin when incinerated, excellent in storage stability, curable at relatively low temperature, and capable of providing a coating film excellent in adhesion to a substrate, cold resistance, and strength.

### Background Art

Plastisol currently and widely used in industry is a composition with a liquid or glue-like consistency in which polymer particles having specifically controlled particle size and particle size distribution are dispersed homogeneously in a plasticizer together with a filler. Plastisol applied to a substrate and given processing heat at a proper temperature forms a tough coating film.

Polymers generally used in plastisol include vinyl chloride homopolymers and vinyl chloride-based polymers such as vinyl chloride-vinyl acetate copolymers. These polyvinyl chloride (hereinafter, "PVC") plastisols have excellent room-temperature, long-term storage stability and form a soft and durable coating film and are therefore widely used in the fields of coated steel plates, clothing, constructional materials, daily necessities and miscellaneous goods, automobile parts, and so forth.

However, PVC plastisols decompose by heat or light to give off hydrogen chloride gas. Hydrogen chloride gas thus generated poses problems such that it supplies a source of ozone depleting substances, causes acid rain, and accelerates damage to incinerators when incinerated. Moreover, there is a danger of dioxin generation under some incineration conditions. Therefore PVC plastisols are unfavorable to safety, health, and environmental conservation, and development of new plastisol supplanting PVC plastisols has been awaited.

The patent document 1 proposes plastisol comprising an acrylate polymer and an organic plasticizer that can replace PVC plastisol, which has turned out to be insufficient in storage stability and film-forming properties.

The patent document 2 discloses PVC-free plastisol comprising a methyl methacrylate homo- or copolymer, a plasticizer, a filler, a blocked polyisocyanate, and a polyamine. When processed at a relatively low temperature, however, the plastisol fails to form a coating film with satisfactory properties on account of insufficient cure of the urethane resin. In addition, when left to stand at around 35°C, the plastisol turns into a gel in one or two days.

The patent document 3 proposes acrylic sol comprising acrylic polymer fine particles, a blocked urethane resin, a solid hydrazine curing agent, a plasticizer, and a filler. The patent document 4 proposes acrylic sol for sound absorbing undercoating comprising acrylic polymer fine particles, a plasticizer, a filler, a blocked urethane resin, a curing agent, and a blowing agent. These acrylic sols, however, have a disadvantage, such as insufficient adhesion to a substrate or insufficient flexibility particularly in low temperature.

Furthermore, the patent document 5 proposes a thermosetting composition comprising plastisol, a blocked urethane or blocked isocyanate, and a latent curing agent, the plastisol comprising core-shell type acrylic resin particles, a filler, and a plasticizer. The patent document 6 discloses a thermosetting composition comprising plastisol, a blocked urethane or blocked isocyanate, and a latent curing agent, the plastisol comprising acrylic resin particles, a filler, and a plasticizer. The latent curing agent is particulate solid at ambient temperature, has a melting point of 60°C or higher, and is insoluble in the plasticizer at 40°C or lower. These thermosetting compositions are still unsatisfactory in viscosity stability and adhesion, however.

Patent document 1 : JP-B-55-16177
Patent document 2 : JP-B-63-66861
Patent document 3 : JP-A-2001-329135
Patent document 4 : JP-A-2001-329208
Patent document 5 : WO01/88009A1
Patent document 6 : WO01/88011A1

### Disclosure of the Invention:

### Problems to be Solved by the Invention:

The present invention has been completed in the light of the above circumstances. An object of the invention is to provide an acrylic sol composition which does not generate hydrogen chloride or dioxin when incinerated, exhibits high storage stability, cures at relatively low temperatures, and provides a coating film excellent in adhesion to a substrate, cold resistance, and strength.

### Means for Solving the Problems:

As a result of extensive investigations, the inventors of the present invention have found that an acrylic sol composition settling the above-described problems can be obtained by incorporating a modified polyoxyalkylene polyamine compound into an acrylic sol composition comprising acrylic polymer fine particles, blocked polyurethane, etc. and now reached the present invention.

The present invention provides an acrylic sol composition comprising (a) acrylic polymer fine particles, (b) blocked polyurethane, (c) a polyamine compound containing at least one modification product derived from a polyether polyamine compound represented by formula (I) shown below, (d) a plasticizer, and (d) a filler.

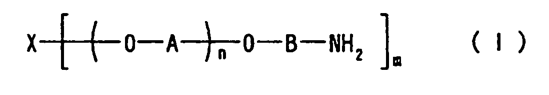

wherein X represents a residue of a di- to hexahydric polyol having m hydroxyl groups removed therefrom; A represents an alkylene group having 2 to 4 carbon atoms; B represents an alkylene group having 1 to 4 carbon atoms; m represents a number of 2 to 6; and n represents a number of 0 to 50; a plurality of A's, B's, and n's per molecule may be each the same or different.

### Best Mode for Carrying out the Invention:

The acrylic sol composition of the present invention will be described in detail with reference to its preferred embodiments.

The acrylic polymer fine particles (a) that can be used in the invention include those commonly employed in acrylic sol compositions, such as homo- and copolymers of monomers selected from alkyl acrylates and alkyl methacrylates. Specific examples of the monomers are methyl acrylate, ethyl acrylate, n-propyl acrylate, isopropyl acrylate, n-butyl acrylate, isobutyl acrylate, sec-butyl acrylate, tert-butyl acrylate, cyclohexyl acrylate, benzyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, cyclohexyl methacrylate, and benzyl methacrylate.
Styrene, α-methylstyrene, methacrylic acid, acrylic acid, itaconic acid, and crotonic acid, etc. can be used as copolymerizable monomers.

Core-shell acrylic polymer fine particles composed of a core and an outer shell are preferred as component (a). Use of the core-shell acrylic polymer fine particles is advantageous in that the resulting acrylic sol composition exhibits further improved storage stability and is more inhibited from increasing the viscosity when applied and from bleeding after heat curing.

In using core-shell acrylic polymer fine particles as component (a), it is preferred that the core be formed of a polymer compatible with a plasticizer and the shell be formed of a polymer incompatible with the plasticizer. With the plasticizer-compatible core being covered with the plasticizer-incompatible polymer shell, the acrylic sol composition has the improved storage stability without increasing its viscosity during storage. Such a shell-forming polymer becomes compatible with the plasticizer on being heated to an appropriate temperature so that no bleeding occurs after heat cure.

The core preferably contains 50% by mass or more of at least one polymer selected from homo- and copolymers of a methacrylate monomer(s) such as n-butyl methacrylate, isobutyl methacrylate, and ethyl methacrylate. By making the core of such a polymer having high compatibility with a plasticizer, bleeding after heat curing can be suppressed. In order to impart flexibility to a coating film, in particular, it is still preferred that the core be made mainly of a butyl methacrylate-isobutyl methacrylate copolymer.

The shell preferably contains 50% by mass or more of at least one polymer selected from homo- or copolymers of a methacrylate monomer(s) such as methyl methacrylate and benzyl methacrylate and copolymers of the methacrylate monomer and comonomers such as styrene. By making the shell of such a polymer having low compatibility with a plasticizer, the particles bring about further improved storage stability of the acrylic sol composition, suppressing an increase in viscosity during storage. To further ensure improvement in storage stability, the shell is still preferably made of a polymer mainly comprising a methyl methacrylate monomer.

The ratio of the core-forming polymer to the shell-forming polymer preferably ranges from 25/75 to 70/30 by mass. Particles having a core/shell ratio of less than 25/75 by part by weight are more likely to cause bleeding after heat cure than those having the above-recited preferred core/shell ratio. With a core/shell ratio exceeding 70/30 by part by weight, it is more likely that the core is insufficiently covered with the shell than with the above-recited preferred core/shell ratio, which can adversely affect the storage stability.

The core-shell acrylic polymer fine particles that can be used in the acrylic sol composition of the invention include those described in JP-A-6-172734, JP-A-2001-329135, JP-A-2001-329208, and WO01/88009.

It is preferred for the acrylic polymer fine particles (a) to have a weight average molecular weight of 100,000 to several millions from the standpoint of coating film strength and storage stability and to have an average particle size of 0.1 to 10 µm from the viewpoint of dispersibility in a plasticizer and storage stability.

The blocked polyurethane that can be used in the invention as component (b) is one prepared by reacting a polyisocyanate with an α-polyol, such as polyether polyol or polyester polyol, and blocking the resulting polyurethane with a blocking agent.

The polyisocyanate includes propane 1,2-diisocyanate, 2,3-dimethylbutane 2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate (HDI), trimethylhexamethylene diisocyanate, lysine diisocyanate, tolylene diisocyanate (TDI), xylylene diisocyanate, metatetramethylxylylene diisocyanate, isophorone diisocyanate (or 3-isocyanatomethyl-3,5,5-trimethylcyclohexyl isocyanate), 1,3- or 1,4-bis(isocyanatomethyl)cyclohexane, diphenylmethane-4,4'-diisocyanate (MDI), dicyclohexylmethane 4,4'-diisocyanate (or hydrogenated MDI), hydrogenated tolylene diisocyanate, and mixtures thereof. These polyisocyanate compounds may take an isocyanurate (trimer) form.

An isocyanurate form of the polyisocyanate can be obtained by polymerizing the polyisocyanate in an inert solvent (e.g., methyl acetate, ethyl acetate, butyl acetate, methyl ethyl ketone or dioxane) or a plasticizer (such as a phthalic ester, e.g., diethyl phthalate, dibutyl phthalate, di-2-ethylhexyl phthalate, a mixed alkyl phthalate having 7 to 11 carbon atoms in the alkyl moiety (represented as C₇-C₁₁), butylbenzyl phthalate or hexanolbenzyl phthalate; a phosphoric ester, e.g., tricresyl phosphate or triphenyl phosphate; an adipic ester, e.g., di-2-ethylhexyl adipate; or a trimellitic ester, e.g., a C₇₋C₁₁ mixed alkyl trimellitate) in the presence of a known catalyst (e.g., tertiary amines, quaternary ammonium compounds, Mannich bases, fatty acid alkali metal salts or alcoholates) in a known manner. It is desirable that a polymerization product system obtained by using a highly volatile solvent be finally subjected to solvent replacement with an appropriate high-boiling solvent, such as a plasticizer.

Of these polyisocyanates at least one compound selected from 1,6-hexamethylene diisocyanate (HDI), isophorone diisocyanate (IPDI), and dicyclohexylmethane-4,4'-diisocyanate (hydrogenated MDI) is preferred for obtaining an acrylic sol composition excellent in storage stability.

The polyether polyol that can be used with the polyisocyanate in the preparation of the blocked polyurethane (b) preferably includes polyalkylene glycol (molecular weight: ca. 100 to 5500) adducts of polyhydric alcohols.

The polyhydric alcohols include aliphatic dihydric alcohols, such as ethylene glycol, propylene glycol, 1,4-butylene glycol, and neopentane glycol; trihydric alcohols, such as glycerol, trihydroxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerol, pentaglycerol, 1,2,4-butanetriol, 1,2,4-pentanetriol, and trimethylolpropane; tetrahydric alcohols, such as erythritol, pentaerythritol, 1,2,3,4-pentanetetrol, 2,3,4,5-hexanetetrol, 1,2,3,5-pentanetetraol, and 1,3,4,5-hexanetetrol; pentahydric alcohols, such as ribitol, arabinitol, and xylitol; and hexahydric alcohols, such as glucitol, mannitol, and iditol. Of the polyhydric alcohols preferred are di-, tri-and tetrahydric alcohols, with propylene glycol and glycerol being particularly preferred.

The polyether polyols can be prepared by adding an alkylene oxide having 2 to 4 carbon atoms to such a polyhydric alcohol to give a desired molecular weight in a usual manner. The alkylene oxide having 2 to 4 carbon atoms includes ethylene oxide, propylene oxide, and butylene oxide, with propylene oxide being preferred.

The polyester polyols that can be used with the polyisocyanate in the preparation of the blocked polyurethane (b) include conventionally known polyesters prepared from, for example, polycarboxylic acids and polyhydric alcohols and polyesters obtained from lactams.

The polycarboxylic acids include benzenetricarboxylic acid, adipic acid, succinic acid, suberic acid, sebacic acid, oxalic acid, methyladipic acid, glutaric acid, pimelic acid, azelaic acid, phthalic acid, terephthalic acid, isophthalic acid, thiodipropionic acid, maleic acid, fumaric acid, citraconic acid, itaconic acid, and other appropriate like ones.

The polyhydric alcohols include ethylene glycol, propylene glycol, 1,4-butanediol, 1,3-butanediol, 1,5-pentanediol, 1,6-hexanediol, bis(hydroxymethylchlorohexane), diethylene glycol, 2,2-dimethylpropylene glycol, 1,3,6-hexanetriol, trimethylolpropane, pentaerythritol, glucitol, glycerol, and other appropriate like ones. In addition, polyhydroxy compounds, such as polytetramethylene glycol and polycaprolactone glycol, are also usable.

Of the above-recited α-polyols preferred are the polyether polyols, especially those having at least trifuncitonality. In particular, use of glycerol tris(polypropylene glycol) results in an acrylic sol composition excellent in adhesion to a substrate.

The polyurethane composing the blocked polyurethane (b) is obtained by, for example, allowing a polyhydroxy compound, such as the above-described polyether polyol and/or polyester polyol or its mixture with a hydroxy-containing glyceride, e.g., castor oil, to react with the aforementioned polyisocyanate.
In the preparation of the polyurethane, a molar ratio of the polyisocyanate to the polyhydroxy compound, e.g., an α-polyol, is usually 1.5 to 3.5/1, preferably 2.0 to 3.5/1. The NCO content of the prepolymer (polyurethane) is usually 1% to 20%, preferably 1% and 10%.

The polyurethane can be obtained in a common method. The reaction temperature is usually 40° to 140°C, preferably 60° to 130°C. The reaction can be carried out using a known catalyst for accelerating urethane polymerization, such as an organometallic compound, e.g., dibutyltin dilaurate, tin (II) octoate, stannous octoate, lead octylate, lead naphthenate, and zinc octylate, or a tertiary amine compound, e.g., triethylenodiamine or triethylamine.

The blocked polyurethane (b) is obtained by blocking the above-mentioned polyurethane with a blocking agent. The blocking agent includes active methylene compounds, such as malonic diesters (e.g., diethyl malonate), acetylacetone, and acetoacetic esters (e.g., ethyl acetoacetate); oxime compounds, such as acetoxime, methyl ethyl ketoxime (MEK oxime), and methyl isobutyl ketoxime (MIBK oxime); monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, stearyl alcohol, and their isomers; glycol derivatives, such as methyl glycol, ethyl glycol, ethyl diglycol, ethyl triglycol, butyl glycol, and butyl diglycol; and amine compounds, such as dicyclohexylamine.

The blocking reaction to obtain the blocked polyurethane (b) is performed in a known manner. The blocking agent is used in an amount usually of from 1 to 2 equivalents, preferably 1.00 to 1.5 equivalents, per free isocyanate group.

While the blocking of the polyurethane is commonly effected by adding the blocking agent to the polyurethane polymerization system in the final stage of the polymerization, the blocked polyurethane (b) may be obtained by adding the blocking agent in an arbitrary stage of the polymerization.

The blocking agent can be added either at the end of or in the initial stage of polymerization or, part of the blocking agent may be added in the initial stage of polymerization, and the rest at the end of the polymerization. Preferably, the blocking agent is added at the end of the polymerization. The isocyanate content (%), which is determined by, for example, the method described in Polyurethane, Maki Shoten, 1960, 21, can be used as an indication of the end point of polymerization. The reaction temperature at which the blocking agent is added is usually 50° to 150°C, preferably 60° to 120°C. The reaction time is usually about 1 to 7 hours. It is possible to accelerate the reaction by addition of the aforesaid known catalyst for urethane polymerization. In effecting the reaction, an arbitrary amount of the plasticizer described later can be added to the reaction system.

The acrylic sol composition of the present invention preferably contains the acrylic polymer fine particles (a) and the blocked polyurethane (b) at an (a) to (b) ratio of 90/10 to 15/85, still preferably 90/10 to 50/50, by mass. When the amount of the blocked polyurethane (b) is less than 10 parts by mass for 90 parts by mass of the acrylic polymer fine particles (a), the coating film of the acrylic sol composition tends to be insufficient in adhesion to a substrate, cold resistance, and strength as compared with that of the acrylic sol composition having the above-recited preferred (a) to (b) ratio. When the amount of the blocked polyurethane (b) is more than 85 parts by mass for 15 parts by mass of the acrylic polymer fine particles (a), the acrylic sol composition tends to have an increased viscosity, which can impair the workability in applying the composition, as compared with that having the above-recited preferred (a) to (b) ratio.

The polyamine compound as component (c) is then described. In formula (I), X represents a residue of a polyol with m hydroxyl groups removed therefrom. The polyol that provides the residue X includes ethylene glycol, 1,2-propylene glycol, 1,3-propylene glycol, 1,3-butanediol, 1,4-butanediol, 1,6-hexanediol, neopentyl glycol, benzenedimethanol, cyclohexanedimethanol, glycerol, trimethylolethane, trimethylolpropane, pentaerythritol, diglycerol, ditrimethylolpropane, glucitol, mannitol, and dipentaerythritol. Di- or trihydric polyols are preferred of them. The alkylene group having 2 to 4 carbon atoms as represented by A includes ethylene, 1,2-propylene, 1,3-propylene, 1,2-butylene, 1,3-butylene, and 1,4-butylene. Ethylene or propylene is preferred of them. The alkylene group having 1 to 4 carbon atoms as represented by B includes methylene, ethylene, 1,2-propylene, 1,3-propylene, 1,2-butylene, 1,3-butylene, and 1,4-butylene. Ethylene or propylene is preferred of them. m is preferably 2 or 3, and n is preferably 0 to 10.

The polyether polyamine compound represented by formula (I) is known. It is synthesized by, for example, adding an alkylene oxide, e.g., ethylene oxide or propylene oxide, to a polyol having the residue X and aminating the terminal hydroxyl groups or adding acrylonitrile to the terminal hydroxyl groups followed by reduction to convert the nitrile groups to amino groups.

Typical examples of the polyether polyamine compounds of formula (I)

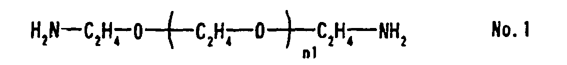

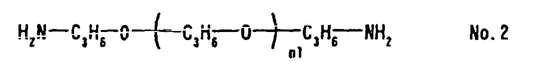

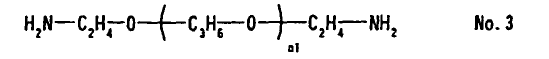

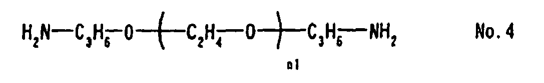

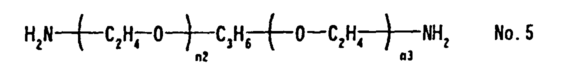

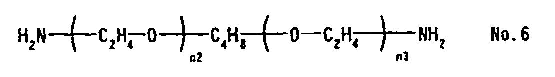

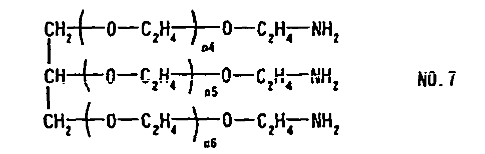

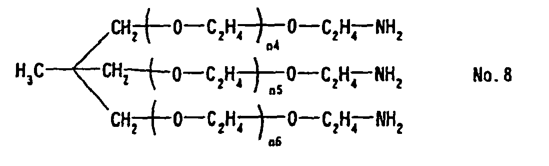

wherein n1 represents a number of 3 to 100; n2 and n3 each represent a number of 1 to 50; and n4, n5, and n6 each represent a number of 0 to 50.

Commercially available products of these compounds include Jeffamine D series (D-230, D-400, D-2000, and D-4000), Jeffamine ED series (ED-600 and ED-2003), and Jeffamine T series (T-403, T-3000, and T-5000), all available from Heinz Japan Ltd.).

A modification product of the above-described polyether amine compound, which can be used as the polyamine compound (c) in the present invention, is the polyether amine compound of formula (I) having a part of the N-H groups thereof modified to have reduced reactivity. Such a modification product includes epoxy adducts, acrylate adducts, polyamide adducts and Mannich reaction products of the polyether polyamine compounds of formula (I).

Of these modification products, epoxy adducts or acrylate adducts of the polyether polyamine compounds of formula (**I**) are preferred; for they provide an acrylic sol composition with excellent storage stability.

Epoxy compounds (polyglycidyl compounds) providing the epoxy adducts include polyglycidyl ether compounds of mononuclear polyhydric phenol compounds, such as hydroquinone, resorcin, pyrocatechol, and phloroglucinol; polyglycidyl ether compounds of polynuclear polyhydric phenol compounds, such as dihydroxynaphthalene, biphenol, methylenebisphenol (or bisphenol F), methylenebis(orthocresol), ethylidenebisphenol, isopropylidenebisphenol (or biphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolak, orthocresol novolak, ethylphenol novolak, butylphenol novolak, octylphenol novolak, resorcin novolak, bisphenol A novolak, bisphenol F novolak, and terpenediphenol; polyglycidyl ether compounds of ethylene oxide and/or propylene oxide adducts of the above-enumerated mononuclear or polynuclear polyhydric phenol compounds; polyglycidyl ether compounds of hydrogenation products of the above-enumerated mononuclear polyhydric phenol compounds; polyglycidyl ethers of polyhydric alcohols, such as ethylene glycol, propylene glycol, butylene glycol, hexanediol, polyglycol, thiodiglycol, glycerol, trimethylolpropane, pentaerythritol, glucitol, a bisphenol A-ethylene oxide adduct, and dicyclopentadienedimethanol; homo- or copolymers of glycidyl esters of aliphatic, aromatic or alicyclic polybasic acids, e.g., maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylenetetrahydrophthalic acid, or glycidyl methacrylate; epoxy compounds having a glycidylamino group, such as N,N-diglycidylaniline and bis(4-(N-methyl-N-glycidylamino)phenyl)methane; epoxidized cyclic olefin compounds, such as vinylcyclohexene diepoxide, dicyclopentanediene diepoxide, 3,4-epoxycyclohexylmethyl-3,4-epoxycyclohexanecarboxylate, 3,4-epoxy-6-methylcyclohexylmethyl-6-methylcyclohexanecarboxylate, and bis(3,4-epoxy-6-methylcyclohexylmethyl) adipate; epoxidized conjugated diene polymers, such as an epoxidized polybutadiene and an epoxidized styrene-butadiene copolymer; and heterocyclic compounds, such as triglycidyl isocyanurate. The epoxy compound may be a compound internally crosslinked with an isocyanate-terminated prepolymer. Of the recited epoxy compounds preferred are bisphenol A or F epoxy resins.

The method of preparing an epoxy adduct from the polyether polyamine compound of formula (I) and the epoxy compound is not particularly limited. For example, the epoxy adduct can easily be obtained by using 0.3 to 1.2 equivalents of the epoxy compound per mole of the polyether polyamine compound and conducting the addition reaction at 100° to 200°C for several minutes to several hours, if needed, in a solvent.

Acrylic compounds that provide the acrylate adducts include methyl acrylate, ethyl acrylate, propyl acrylate, butyl acrylate, methyl methacrylate, ethyl methacrylate, propyl methacrylate, butyl methacrylate, and acrylonitrile, with alkyl acrylates being preferred.

The method of preparing an acrylate adduct from the polyether polyamine compound of formula (I) and the acrylic compound is not particularly limited. For example, the acrylate adduct can easily be obtained by using 0.3 to 1.2 mol of the acrylic compound per mole of the polyether polyamine compound and performing the reaction (dealcoholation) at 100° to 300°C for several minutes to several hours in the presence of a catalyst, e.g., p-toluenesulfonic acid, if desired, in a solvent.

The plastisol composition of the invention may contain a polyamine compound other than the polyether polyamine compound (I) modification product as part of the polyamine compound (c).

Examples of the other useful polyamine compounds include aliphatic polyamines, such as ethylenediamine, diethylenetriamine, triethylenetetramine, and tetraethylenepentamine; alicyclic polyamines, such as isophoronediamine, menthenediamine, bis(4-amino-3-methyldicyclohexyl)methane, diaminodicyclohexylmethane, bis(aminomethyl)cyclohexane, N-aminoethylpiperazine, and 3,9-bis(3-aminopropyl)-2,4,8,10-tetraoxaspiro(5.5)undecane; mononuclear polyamines, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, and 3,5-diethyltolylene-2,6-diamine; aromatic polyamines, such as biphenylenediamine, 4,4-diaminodiphenylmethane, 2,5-naphthylenediamine, and 2,6-naphthylenediamine; and modification compounds derived from the above-recited polyamine compound, such as graft-modified polyamines obtained by glycidyl ether addition and Mannich-modified polyamines obtained by modification with phenols and aldehydes.

The modification product of the polyether polyamine compound (I) as the polyamine compound (c) is preferably used in an amount of 0.01 to 10 parts by mass, still preferably 0.05 to 5 parts by mass, per 100 parts by mass of the acrylic polymer fine particles (a). The other polyamine compound(s) can be used in an arbitrary amount up to 10 parts by mass per 100 parts by mass of the acrylic polymer fine particles (a).

The plasticizer that can be used in the invention as component (d) includes those conventionally employed in PVC plastisol, such as phthalic acid plasticizers, e.g., diisononyl phthalate, di(2-ethylhexyl) phthalate, diisodecyl phthalate, and butylbenzyl phthalate; fatty acid ester plasticizers, e.g., di(2-ethylhexyl) adipate, di-n-decyl adipate, di(2-ethylhexyl) azelate, dibutyl sebacate, and di(2-ethylhexyl) sebacate; phosphoric ester plasticizers, e.g., tributyl phosphate, tri(2-ethylhexyl) phosphate, and 2-ethylhexyldiphenyl phosphate; epoxy plasticizers, e.g., epoxidized soybean oil; polyester plasticizers, and benzoic acid plasticizers. These plasticizers can be used either individually or as a combination of two or more thereof. It is particularly preferred to use diisononyl phthalate in view of its low price and availability. From the aspect of coating film strength, workability in applying the composition and the like, the plasticizer (d) is preferably used in an amount of 50 to 500 parts by mass, still preferably 80 to 300 parts by mass, per 100 parts by mass of the acrylic polymer fine particles (a).

The filler that can be used in the invention as component (e) includes those commonly employed in plastisol, such as calcium carbonate, mica, talc, kaolin clay, silica, and barium sulfate. Fibrous fillers, such as glass fiber, wollastonite, alumina fiber, ceramic fiber, and various whiskers, are also useful. Calcium carbonate is particularly preferred because of its low price. From the viewpoint of coating film strength, cost, and the like, the filler (e) is preferably used in an amount of 50 to 800 parts by mass, still preferably 80 to 500 parts by mass, per 100 parts by mass of the acrylic polymer fine particles (a).

The acrylic sol composition of the invention can contain other additives known in the art, including colorants, antioxidants, blowing agents, diluents, and ultraviolet absorbers, in addition to the components (a) to (e). Useful colorants include inorganic pigments, such as titanium dioxide and carbon black, and organic pigments, such as azo pigments and phthalocyanine pigments. Useful antioxidants include phenol antioxidants and amine antioxidants. The blowing agents that can be used include those which generate gas on heating, such as azo blowing agents, e.g., azodicarbonamide and azobisformamide. Useful diluents include solvents such as xylene and mineral turpentine. Useful ultraviolet absorbers include benzotriazole derivatives.

The acrylic sol composition of the invention can be prepared by any method conventionally and commonly employed for plastisol preparation. For example, the acrylic sol composition of the invention is prepared by thoroughly mixing the acrylic polymer fine particles (a), the blocked polyurethane (b), the polyamine compound (c), the plasticizer (d), the filler (e), and, if desired, other additives by stirring in a known mixing machine. Useful mixing machines include a planetary mixer, a kneader, a grain mill, and a roll.

The acrylic sol composition of the invention can be applied by conventional known coating methods including brush coating, roller coating, air spraying, and airless spraying. The applied acrylic sol composition is heated to form a coating film. Heating is carried out in an ordinary manner, for example, using a hot air circulating drying oven.

The acrylic sol composition of the present invention is suited for use as coatings, inks, adhesives, pressure-sensitive adhesives, sealing agents, and so forth. It is also applicable to molded articles including daily miscellaneous goods, toys, industrial parts, and electrical parts. Application to paper, cloth, etc. provides artificial leather, rugs, wallpaper, clothing materials, waterproof sheets, etc. Application to a metal plate provides an anticorrosive metal plate.

### EXAMPLES

The acrylic sol composition of the present invention will now be illustrated more concretely by way of Examples.

### PREPARATION EXAMPLE 1: Preparation of Blocked Polyurethane (BU-1)

In a reaction vessel were charged 400 g of diisononyl phthalate, 472 g of glycerol tris(polypropylene glycol) (molecular weight: 4000) and 0.025 g of dibutyltin laurate and subjected to dehydration reaction at 100° to 110°C under reduced pressure of 30 mmHg for 1 hour. The reaction mixture was cooled to 60°C, and 95 g of dicyclohexylmethane-4,4'-diisocyanate (hydrogenated MDI) was added thereto, followed by allowing the mixture to react in a nitrogen atmosphere at 60° to 70°C for 3 hours. The reaction system was cooled to 60°C, and 33 g of methyl ethyl ketoxime was added thereto dropwise, followed by aging at 80° to 90°C for 1 hour, and followed by degasification at 100° to 110°C under 30 mmHg for 1 hour.
After confirming complete disappearance of the NCO absorption at 2660 cm⁻¹ in the IR spectrum, blocked polyurethane, designated BU-1, was obtained.

### PREPARATION EXAMPLE 2: Preparation of Blocked Polyurethane (BU-2)

In a reaction vessel were charged 400 g of diisononyl phthalate, 499 g of glycerol tris(polypropylene glycol) (molecular weight: 4000) and 0.025 g of dibutyltin laurate and subjected to dehydration reaction at 100° to 110°C under reduced pressure of 30 mmHg for 1 hour. The reaction mixture was cooled to 60°C, and 65 g of 1,6-hexamethylene diisocyanate was added thereto, followed by allowing the mixture to react in a nitrogen atmosphere at 60° to 70°C for 3 hours. The reaction system was cooled to 60°C, and 33 g of methyl ethyl ketoxime was added thereto dropwise, followed by aging at 80° to 90°C for 1 hour, and followed by degasification at 100° to 110°C under 30 mmHg for 1 hour.
After confirming complete disappearance of the NCO absorption at 2660 cm⁻¹ in the IR spectrum, blocked polyurethane, designated BU-2, was obtained.

### PREPARATION EXAMPLE 3: Preparation of Blocked Polyurethane (BU-3)

In a reaction vessel were charged 400 g of diisononyl phthalate, 482 g of glycerol tris(polypropylene glycol) (molecular weight: 4000), and 0.025 g of dibutyltin laurate and subjected to dehydration reaction at 100° to 110°C under reduced pressure of 30 mmHg for 1 hour. The reaction mixture was cooled to 60°C, and 84 g of isophorone diisocyanate was added thereto, followed by allowing the mixture to react in a nitrogen atmosphere at 60° to 70°C for 3 hours. The reaction system was cooled to 60°C, and 33 g of methyl ethyl ketoxime was added thereto dropwise, followed by aging at 80° to 90°C for 1 hour, and followed by degasification at 100° to 110°C under 30 mmHg for 1 hour.
After confirming complete disappearance of the NCO absorption at 2660 cm⁻¹ in the IR spectrum, blocked polyurethane, designated BU-3, was obtained.

### COMPARATIVE PREPARATION EXAMPLE 1: Preparation of Blocked Isocyanate (BI-1)

In a reaction vessel was put 600 g of diisononyl phthalate and dehydrated at 100° to 110°C under reduced pressure of 30 mmHg or less for 1 hour. Coronate 2030 (tolylene diisocyanate in nurate form, available from Nippon Polyurethane Industry Co., Ltd.) was added thereto, and the mixture was heated at 130° to 140°C under 30 mmHg or less for 4 hours to remove butyl acetate. ε-Caprolactam and dibutyltin laurate were added to the reaction mixture, and the mixture was allowed to react at 130° to 140°C and 4 hours.
After confirming complete disappearance of the NCO absorption at 2660 cm⁻¹ in the IR spectrum, blocked isocyanate, designated BI-1, was obtained.

### PREPARATION EXAMPLE 4: Preparation of Modified Polyamine (PA-1)

In a reaction vessel were put 183 g of isophoronediamine and 200 g of toluene and heated to 80°C. To the solution was added in portion 218 g of Adeka Resin EP-4100E (bisphenol A epoxy resin from Asahi Denka Co., Ltd.; epoxy equivalent: 190), followed by aging at 90° to 100°C for 2 hours. To the mixture was added 600 g of Jeffamine T-403 (polyether polyamine, from Heinz). The mixture was heated up to 120°C, and nitrogen was blown therein to remove toluene. The reaction mixture was further heated at 120° to 130°C under reduced pressure of 30 mmHg or less for 2 hours to give modified polyamine PA-1.

### PREPARATION EXAMPLE 5: Preparation of Modified Polyamine (PA-2)

In a reaction vessel were charged 300 g of diisononyl phthalate and 526 g of Jeffamine T-403 and heated to 80°C. To the mixture was added in portion 174 g of Adeka Resin EP-4100E (bisphenol A epoxy resin from Asahi Denka Co., Ltd.; epoxy equivalent: 190), followed by aging at 80° to 90°C for 2 hours to give modified polyamine PA-2.

### PREPARATION EXAMPLE 6: Preparation of Modified Polyamine (PA-3)

In a reaction vessel were put 895 g of Jeffamine D-230 and 1 g of p-toluenesulfonic acid and heated up to 80°C. To the mixture was added dropwise 167 g of methyl acrylate, followed by aging at 80° to 90°C for 1 hour. The reaction mixture was heated at 180° to 190°C for 2 hours to remove methanol, and the residue was heated at 180° to 190°C under reduced pressure of 30 mmHg or less for 1 hour to obtain modified polyamine PA-3.

### COMPARATIVE PREPARATION EXAMPLE 2: Preparation of Modified Polyamine (HPA-1)

A mixture of 146 g of triethylenetetramine and 295 g of dimer acid was allowed to react at 180° to 190°C under atmospheric pressure for 2 hours for dehydration and then at 180° to 190°C under reduced pressure of 30 mmHg or lower for 2 hours to give modified polyamine HPA-1.

### EXAMPLES 1 TO 7 AND COMPARATIVE EXAMPLES 1 TO 5

Acrylic polymer fine particles were compounded with the blocked polyurethane and the modified polyamine obtained in Preparation Examples and Comparative Preparation Examples and other components according to the formulations shown in Tables 1 and 2 below and dispersively mixed in a kneader to obtain acrylic sol compositions of Examples 1 to 7 and Comparative Examples 1 to 5.

The acrylic sol compositions of Examples 1 to 7 and Comparative Examples 1 to 5 were evaluated for viscosity stability, adhesion, colorlessness, and film strength in accordance with the following methods. The results obtained are shown in Tables 1 and 2.

### (1) Viscosity stability

The initial viscosity of the acrylic sol composition at 20°C was measured with a Brookfield viscometer. The acrylic sol composition was then put in a closed container and maintained at 35°C for 10 days. After cooling to 20°C, the viscosity was measured again to obtain a percent viscosity change from the initial viscosity. A composition showing a viscosity change within 50% was rated "good", and one showing a viscosity change of 50% or greater "poor".

### (2) Adhesion

The acrylic sol composition was applied to one end of an electrodeposition-coated steel plate of 25 mm in width, 100 mm in length and 1.0 mm in thickness. That end of the plate was press bonded with an end of another plate with a spacer therebetween to have the joint thickness set at 3 mm. In this state, the joint was baked at 130°C or 180°C each for 30 minutes, and the spacer was removed. The two plates were pulled apart at a speed of 50 mm/min in a shear direction to observe the failure of the joint. A cohesive failure was rated "good", and an interfacial failure "poor".

### (3) Colorlessness

The acrylic sol composition having been baked at 130°C or 180°C each for 30 minutes was observed with the naked eye, and the state of coloration was rated "good" (little coloration), "fair" (coloration) or "poor" (noticeable coloration).

### (4) Coating film strength

The acrylic sol composition was applied on a separable plate to a thickness of 2 mm and baked at 130°C for 30 minutes. The film was punched into a dumbbell specimen (JIS, No. 2), which was pulled at a speed of 50 mm/min at 23°C to measure breaking strength (MPa) and elongation (%).

**TABLE 1**

| | | Example | | | | | | |
|---|---|---|---|---|---|---|---|---|
| | | 1 | 2 | 3 | 4 | 5 | 6 | 7 |
| Formulation (part by mass): | | | | | | | | |
| AR^{*1} | | 27 | 27 | 27 | 2.7 | 27 | 27 | 27 |
| BU-1 (Prepn. Ex. 1) | | 9 | 9 | 9 | 9 | 9 | | |
| BU-2 (Prepn. Ex. 2) | | | | | | | 9 | |
| BU-3 (Prepn. Ex. 3) | | | | | | | | 9 |
| BI-1 (Compara. Prepn. Ex. 1) | | | | | | | | |
| PA-1 (Prepn. Ex. 4) | | 1 | 1 | 1 | | | 1 | 1 |
| PA-2 (Prepn. Ex. 5) | | | | | 1 | | | |
| PA-3 (Prepn. Ex. 6) | | | | | | 1 | | |
| HPA-1 (Compara. Prepn. Ex. 2) | | | | | | | | |
| DINP^{*2} | | 27 | 38 | 27 | 27 | 27 | 27 | 27 |
| Calcium carbonate | | 13.5 | 13.5 | 4.5 | 13.5 | 13.5 | 13.5 | 13.5 |
| Surface-treated calcium carbonate^{*3} | | 13.5 | 13.5 | 22.5 | 13.5 | 13.5 | 13.5 | 13.5 |
| MSP^{*4} | | 9 | | 9 | 9 | 9 | 9 | 9 |

| Test on performance properties: | | | | | | | | |
|---|---|---|---|---|---|---|---|---|
| Viscosity stability | | good | good | good | good | good | good | good |
| Adhesion | 130°C x 30 min | good | good | good | good | good | good | good |
| | 180°C x 30 min | good | good | good | good | good | good | good |
| Colorlessness | 130°C x 30 min | good | good | good | good | good | good | good |
| | 180°C x 30 min | good | good | good | good | good | good | good |
| Film strength | Breaking strength (MPa) | 2.42 | 2.08 | 3.75 | 2.08 | 2.33 | 2.05 | 2.09 |
| | Elongation (%) | 520 | 610 | 292 | 480 | 550 | 560 | 530 |

| | | | | | | | | |
|---|---|---|---|---|---|---|---|---|
| *1: Core-shell acrylic polymer fine particles having a core mainly made of butyl methacrylate-isobutyl methacrylate copolymer and a shell mainly made of methyl methacrylate polymer. *2: Diisononyl phthalate *3: Calcium carbonate surface treated with stearic acid *4: Mineral spirit | | | | | | | | |

**TABLE 2**

| | | Comparative Example | | | | |
|---|---|---|---|---|---|---|
| | | 1 | 2 | 3 | 4 | 5 |
| Formulation (part by mass): | | | | | | |
| AR | | 27 | 27 | 27 | 27 | 27 |
| BU-1 | | | | 9 | 10 | |
| BU-2 | | | | | | |
| BU-3 | | | | | | |
| BI-1 | | | 10 | | | 9 |
| PA-1 | | | | | | 1 |
| PA-2 | | | | | | |
| PA-3 | | | | | | |
| HPA-1 | | | | 1 | | |
| DINP | | 27 | 27 | 27 | 27 | 27 |
| Calcium carbonate | | 13.5 | 13.5 | 13.5 | 13.5 | 13.5 |
| Surface-treated calcium carbonate | | 13.5 | 13.5 | 22.5 | 13.5 | 13.5 |
| MSP | | 9 | 9 | 9 | 9 | 9 |

| Test on performance properties: | | | | | | |
|---|---|---|---|---|---|---|
| Viscosity stability | | good | good | poor | good | poor |
| Adhesion | 130°C x 30 min | poor | poor | good | poor | good |
| | 180°C x 30 min | poor | poor | good | poor | poor |
| Colorlessness | 130°C x 30 min | good | good | fair | good | good |
| | 180°C x 30 min | good | good | poor | good | good |
| Film strength | Breaking strength (MPa) | 1.4 | 1.23 | 2.97 | 1.65 | 1.07 |
| | Elongation (%) | 370 | 335 | 570 | 654 | 311 |

As is apparent from Table 2, the coating film of the acrylic sol composition consisting of the acrylic polymer fine particles, plasticizer and filler (Comparative Example 1) has insufficient adhesion and is utterly insufficient in strength. Addition of the blocked isocyanate to the composition of Comparative Example 1 (Comparative Example 2) brings about no improvement on adhesion or strength of the coating film. Addition of the blocked polyurethane (Comparative Example 4) results in slight improvement in coating film strength but brings about no improvement on adhesion. Where the blocked polyurethane and the polyamine compound other than the specific polyamine compound according to the invention are added (Comparative Example 3), although improvements in adhesion and strength of the coating film are seen, the storage stability markedly reduces, and the coating film undergoes coloration. Where the blocked isocyanate and the specific amine compound of the invention are added (Comparative Example 5), the storage stability markedly reduces with no improvement in coating film strength, and the effect in improving the adhesion of the coating film is very small.

In contrast, as can be seen from Table 1, the acrylic sol compositions consisting of the acrylic polymer fine particles, blocked polyurethane, specific polyether polyamine modification product, plasticizer, and filler are superior in storage stability stability and capability of providing a coating film with high adhesion and toughness.

### Industrial Applicability

The acrylic sol composition according to the present invention generates neither hydrogen chloride gas nor dioxin when incinerated, exhibits high storage stability, cures at relatively low temperatures, and provides a coating film excellent in adhesion to a substrate, cold resistance, and strength. The acrylic sol composition is therefore useful in broad applications including sealing compounds, coatings, and daily necessitates.

## Claims

1. An acrylic sol composition comprising,
(a) acrylic polymer fine particles,
(b) blocked polyurethane,
(c) a polyamine compound containing at least one modification product derived from a polyether polyamine compound represented by formula (I): 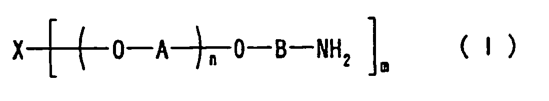 wherein X represents a residue of a di- to hexahydric polyol having m hydroxyl groups removed therefrom; A represents an alkylene group having 2 to 4 carbon atoms; B represents an alkylene group having 1 to 4 carbon atoms; m represents a number of 2 to 6; and n represents a number of 0 to 50; a plurality of A's, B's, and n's per molecule may be each the same or different,
(d) a plasticizer, and
(e) a filler.

2. The acrylic sol composition according to claim 1, wherein the acrylic polymer fine particles (a) and the blocked polyurethane (b) have a mass ratio (a)/(b) of 90/10 to 15/85.

3. The acrylic sol composition according to claim 1 or 2, wherein the acrylic polymer fine particles (a) have a core-shell structure comprising a core and a shell.

4. The acrylic sol composition according to any one of claims 1 to 3, wherein the blocked polyurethane(b) is one obtained from a polyether polyol and a diisocyanate.

5. The acrylic sol composition according to claim 4, wherein the polyether polyol is at least trifunctional.

6. The acrylic sol composition according to claim 5, wherein the at least trifunctional polyether polyol is glycerol tris(polypropylene glycol).

7. The acrylic sol composition according to any one of claims 4 to 6, wherein the diisocyanate is at least one compound selected from the group consisting of 1,6-hexamethylene diisocyanate, isophorone diisocyanate, and dicyclohexylmethane-4,4'-diisocyanate.

8. The acrylic sol composition according to any one of claims 1 to 7, wherein the modification product of the polyether polyamine compound represented by formula (I) is an epoxy adduct or an alkyl acrylate adduct.

9. The acrylic sol composition according to claim 8, wherein the epoxy adduct is one obtained by using a bisphenol A or F epoxy resin.

## Patentansprüche

1. Acrylsol-Zusammensetzung, umfassend
a) feine Partikel aus Acrylpolymer,
b) blockiertes Polyurethan,
c) eine Polyamin-Verbindung, die mindestens ein Modifikations-Produkt enthält, das von einer Polyether-Polyamin-Verbindung stammt, welche durch die Formel (I) dargestellt wird: 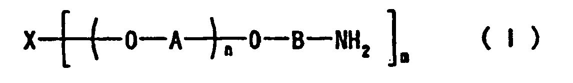 wobei X einen Rest eines zwei- bis sechswertigen Polyols mit m Hydroxylgruppen darstellt, welche davon entfernt wurden; A eine Alkylengruppe mit 2 bis 4 Kohlenstoffatomen darstellt; B eine Alkylengruppe mit 1 bis 4 Kohlenstoffatomen darstellt; m eine Zahl von 2 bis 6 darstellt; und n eine Zahl von 0 bis 50 darstellt; und eine Mehrzahl der Reste A, B, sowie des Index' n pro Molekül jeweils gleich oder verschieden sein können,
d) einen Weichmacher, und
e) einen Füllstoff.

2. Acrylsol-Zusammensetzung nach Anspruch 1, wobei die feinen Partikel aus Acrylpolymer (a) und das blockierte Polyurethan (b) ein Massenverhältnis (a) : (b) von 90:10 bis 15:85 aufweisen.

3. Acrylsol-Zusammensetzung nach Anspruch 1 oder 2, wobei die feinen Partikel aus Acrylpolymer (a) eine Kern-Schalen-Struktur aufweisen, die einen Kern und eine Schale umfasst.

4. Acrylsol-Zusammensetzung nach einem der Ansprüche 1 bis 3, wobei das blockierte Polyurethan (b) aus einem Polyether-Polyol und einem Diisocyanat erhalten wird.

5. Acrylsol-Zusammensetzung nach Anspruch 4, wobei das Polyether-Polyol mindestens trifunktionell ist.

6. Acrylsol-Zusammensetzung nach Anspruch 5, wobei das mindestens trifunktionelle Polyether-Polyol Glycerin-tris(polypropylenglykol) darstellt.

7. Acrylsol-Zusammensetzung nach einem der Ansprüche 4 bis 6, wobei das Diisocyanat mindestens eine Verbindung darstellt, die aus der Gruppe ausgewählt wird, welche aus 1,6-Hexamethylendiisocyanat, Isophorondiisocyanat und Dicyclohexylmethan-4,4'-diisocyanat besteht.

8. Acrylsol-Zusammensetzung nach einem der Ansprüche 1 bis 7, wobei das Modifikations-Produkt der Polyether-Polyamin-Verbindung, welche durch die Formel (I) dargestellt wird, ein Epoxid-Addukt oder ein Alkylacrylat-Addukt darstellt.

9. Acrylsol-Zusammensetzung nach Anspruch 8, wobei das Epoxid-Addukt durch Verwendung eines Bisphenol A- oder Bisphenol F-Epoxid-Harzes erhalten wird.

## Revendications

1. Composition pour sols acryliques comprenant :
(a) de fines particules d'un polymère acrylique,
(b) un polyuréthane bloqué,
(c) un composé de polyamine contenant au moins un produit de modification dérivé d'un composé polyéther-polyamine représenté par la formule (I) :
X- [- (-O-A-)ₙ-O-B-NH₂]ₘ (I)
dans laquelle X représente un résidu d'un polyol di- à hexahydrique dont m groupes hydroxyle en sont éliminés ; A représente un groupe alkylène comportant 2 à 4 atomes de carbone ; B représente un groupe alkylène comportant 1 à 4 atomes de carbone ; m représente un nombre de 2 à 6 ; et n représente un nombre de 0 à 50 ; une pluralité de radicaux A, B et de nombre n par molécule peuvent être chacun identiques ou différents,
(d) un plastifiant, et
(e) une charge.

2. Composition pour sols acryliques selon la revendication 1, dans laquelle les fines particules de polymère acrylique (a) et le polyuréthane bloqué (b) ont un rapport en masse (a)/(b) de 90/10 à 15/85.

3. Composition pour sols acryliques selon la revendication 1 ou 2, dans laquelle les fines particules de polymère acrylique (a) ont une structure à enveloppe et noyau comprenant un noyau et une enveloppe.

4. Composition pour sols acryliques selon l'une quelconque des revendications 1 à 3, dans laquelle le polyuréthane bloqué (b) est un polyuréthane obtenu à partir d'un polyéther-polyol et d'un diisocyanate.

5. Composition pour sols acryliques selon la revendication 4, dans laquelle le polyéther-polyol est au moins trifonctionnel.

6. Composition pour sols acryliques selon la revendication 5, dans laquelle le au moins polyéther-polyol trifonctionnel est le glycérol-tris(polypropylène glycol).

7. Composition pour sols acryliques selon l'une quelconque des revendications 4 à 6, dans laquelle le diisocyanate est au moins un composé choisi dans le groupe constitué par le 1,6-hexaméthylène diisocyanate, l'isophorone diisocyanate et le dicyclohexylméthane-4,4'-diisocyanate.

8. Composition pour sols acryliques selon l'une quelconque des revendications 1 à 7, dans laquelle le produit de modification du composé polyéther-polyamine représenté par la formule (I) est un adduit d'un époxy ou un adduit d'acrylate d'alkyle.

9. Composition pour sols acryliques selon la revendication 8, dans laquelle l'adduit d'un époxy est un adduit obtenu à partir d'une résine époxy de bisphénol A ou F.
